# EUROPÄISCHE PATENTSCHRIFT

(11) **EP 1 637 271 B1**
(45) Veröffentlichungstag und Bekanntmachung des Hinweises auf die Patenterteilung: **18.05.2011**
(21) Anmeldenummer: 05019343.2
(22) Anmeldetag: 06.09.2005
(51) Int. Cl.: B23K 20/02, C04B 37/00, F01D 25/28, C04B 35/575, C04B 35/584, C04B 35/58, C04B 35/563

(54) **Verfahren zum verformungsarmen Diffusionsschweissen von gesinterten nichtoxidierten keramischen Komponenten**
Process for diffusion welding with low deformation of sintered nonoxidised ceramic components
Procédé de soudage par diffusion avec faibles déformations de céramiques frittés sans oxydes

(30) Priorität: 16.09.2004 DE 102004044942
(43) Veröffentlichungstag der Anmeldung: 22.03.2006
(73) Patentinhaber: ESK Ceramics GmbH & Co.KG, 87437 Kempten (DE)
(72) Erfinder: Meschke, Frank, Dr., 87474 Buchenberg (DE); Kayser, Ursula, 87474 Buchenberg (DE); Rendtel, Andreas, Dr., 87435 Kempten (DE)
(74) Vertreter: TER MEER - STEINMEISTER & PARTNER GbR

(56) Entgegenhaltungen:
- US-A- 3 887 412
- US-A- 3 954 483
- US-A- 4 455 385
- US-A- 4 487 644
- US-A- 4 762 269
- US-A- 4 925 608
- US-A1- 2002 160 902
- US-B1- 6 187 705

## Beschreibung

Die Erfindung betrifft ein Verfahren zum verformungsarmen Diffusionsschweißen von keramischen Komponenten gemäß dem Oberbegriff des Anspruchs 1 (siehe, z.B., US 4 925 608).

Keramische Komponenten finden im Anlagen- und Maschinenbau allgemein dort Anwendung, wo Verschleiß, Korrosion und hohe Temperaturbelastungen auftreten. Die Härte, chemische Beständigkeit und Hochtemperaturstabilität von Keramiken ist denen von Stählen weit überlegen. Siliciumcarbid als Vertreter der technischen Keramik besitzt zudem den besonderen Vorteil einer überaus guten thermischen Leitfähigkeit ( 4 x besser als Stahl). Dies prädestiniert den Werkstoff neben dem Einsatz in Düsen, Ventilen, Gleitringdichtungen, Gleitlagern auch zum Einsatz in Reaktoren wie z.B. Rohrbündel-Wärmetauschern oder Dieselrußpartikelfilter. In vielen dieser Anwendungen müssen die Keramikkomponenten aus konstruktiven Gründen sehr komplex geformt sein. Oftmals ist das Design unvereinbar mit den zur Verfügung stehenden keramischen Formgebungsverfahren, so dass ein Verbinden aus Einzelbestandteilen unumgänglich ist. Daher finden sich in der Literatur zahlreiche Arbeiten zum Fügen von Keramik, darunter auch viele zum Fügen von SiC-Keramik. Je nach Verfahren wird in der Literatur als Fachbegriff "Diffusionsschweißen", "Reaktionsbinden" oder "Löten" verwendet. Löten und Reaktionsbinden hinterlassen in der Grenzfläche der Fügepartner eine Naht, während das Diffusionsschweißen so angewendet werden kann, dass aus den Fügepartnern ein nahtfreies Bauteil entsteht. Solche nahtfreien Bauteile werden auch als Monolithe bezeichnet.

Grundlegende Arbeiten zum Thema Diffusionsschweißen von gesinterten SiC-Komponenten veröffentlichte Thomas Moore bereits in den achtziger Jahren. In dem Artikel "Feasibility study of the Welding of SiC" in J. Am. Ceram. Soc. 68 [6] C151-C153 (1985) zeigt er, dass eine stabile, stoffschlüssige Verbindung von polierten ebenen Platten aus α-SiC mit Hilfe des Diffusionsschweißen nur dann möglich ist, wenn dabei so hohe Temperaturen und Drücke aufgebracht werden, dass in Richtung des Pressdrucks eine ca. 25 %-ige plastische Verformung der zu fügenden Bauteile in Kauf genommen werden muss. In dem Artikel wird festgestellt, dass es nicht gelingt, eine nahtlose Schweißverbindung von gesintertem SiC ohne plastische Verformung herzustellen. Selbst nach Heißpressen bei 1950°C und bei 13,8 MPa Druck (Zeit 2 h) finden sich Nähte zwischen den gefügten und erheblich verformten Platten. Eine Absenkung der Temperatur lässt keine besseren Ergebnisse hinsichtlich einer nahtfreien Fügeverbindung erwarten. Die Druckerhöhung beim Diffusionsschweißen bis auf 138 MPa, realisiert mit Hilfe des Heißisostatpressens, ergibt dem Bericht zufolge ebenso keine erfolgreiche Fügeverbindung. Die beobachtete ungenügende stoffliche Verbindung der Komponenten wird auf die zu geringe Sinteraktivität von SiC zurückgeführt.

In US-Patent 4,925,608 (1990) wird als Verfahren das Diffusionsschweißen von geringfügig vorgesinterten SiC-Komponenten auf Basis von heißisostatischem Pressen beschrieben, um einen stoffschlüssigen und nahtfreien SiC-Verbund zu erhalten. Hier wird insbesondere auf die ß-Modifikation von SiC und die höhere Sinteraktivität der noch bis zu 85% porösen Komponenten abgehoben. Bevorzugt werden Temperaturen >1700°C und Drücke größer 150 MPa. Weil während des Fügens noch eine Verdichtung der porösen Komponenten stattfindet, treten entsprechend große plastische Verformungen auf.

Um plastische Verformungen insgesamt gering zu halten und dennoch qualitativ hochwertige Verbindungen zu realisieren, konzentriert sich die Fülle der Arbeiten in der Literatur auf die Fügeverfahren "Löten" und "Reaktionsbinden" bei deutlich niedrigeren Temperaturen. Stand der Technik ist es heute, Keramikkomponenten mit Hilfe von Klebern bei Raumtemperatur zu verbinden, mit Hilfe von Metall- und Glasloten im Bereich um ca. 1000°C zu fügen oder mit dem Reaktionsbinden bei ca. 1400°C zu Bauteilen zusammenzusetzen. Hier ist insbesondere das Reaktionsbinden von Silicium-infiltriertem SiC (Si-SiC) zu erwähnen, mit dem auch komplexe Bauteile wie Plattenwärmetauscher in der Vergangenheit hergestellt wurden. Schwachstelle der Bauteile bleiben immer die Verbindungsnähte. Unter hohen Temperatur-, Korrosions- oder Verschleißbelastungen setzt hier frühzeitig ein Zersetzen, Erweichen oder Herauslösen von Silicium ein und nachfolgend das Versagen. Noch heute gilt es als unmöglich, gesintertes SiC (SSiC) verformungsarm und nahtfrei zu fügen.

Aufgabe der vorliegenden Erfindung ist es daher, ein Verfahren zur Verfügung zu stellen, welches es ermöglicht, Komponenten aus einer nichtoxidischen gesinterten Keramik, so miteinander zu fügen, daß ein nahtfreier Monolith entsteht und die plastischen Verformungen beim Fügen derart gering gehalten werden, daß die Konturen des Monolithen bereits denen des gewünschten Bauteils entsprechen. Auf eine nachgelagerte Hartbearbeitung kann daher verzichtet werden kann.

Ein Verfahren gemäß der Erfindung ist im Anspruch 1 definiert.

Vorzugsweise handelt es sich bei dem Diffusionsschweißen um ein Heißpressverfahren.

Der Widerstand gegen plastische Verformung im Hochtemperaturbereich wird in der Materialkunde mit Hochtemperatur-Kriechbeständigkeit bezeichnet. Als Maß für die Kriechbeständigkeit wird die sogenannte Kriechrate herangezogen. Überraschend zeigte sich, dass die Kriechrate der zu fügenden Werkstoffe als ein zentraler Parameter verwendet werden kann, um die plastische Verformung in einem Fügeprozeß zum nahtfreien Fügen gesinterter keramische Komponenten auf ein Mindestmaß einzustellen.

Die meisten kommerziell verfügbaren gesinterten SiC-Werkstoffe (SSiC) besitzen ähnliche Gefüge mit monomodaler Korngrößenverteilung und einer Korngröße von ca. 5 µm. Sie weisen damit eine bei den genannten Fügetemperaturen von > 1700°C ausreichend hohe Sinteraktivität auf. Sie besitzen aber auch einen vergleichbaren und für ein verformungsarmes Fügen zu niedrigen Kriechwiderstand . Daher wurde bisher in erfolgreichen Diffusionsschweißverfahren immer eine hohe plastische Verformung beobachtet. Weil sich der Kriechwiderstand der SSiC-Werkstoffe im Allgemeinen nicht sonderlich unterscheidet, wurde bisher für das Fügen von SSiC nicht die Kriechrate als verwendungsfähiger variabler Parameter in Betracht gezogen.

Es zeigt sich nun, dass sich die Kriechrate von SSiC über einen weiten Bereich durch Variation der Gefügeausbildung variieren lässt. Erst durch die Verwendung bestimmter Sorten gemäß der Erfindung wird das verformungsarme Fügen für SSiC-Werkstoffe erreichbar.

Die Kriechbeständigkeit von keramischen Werkstoffen lässt sich allgemein durch zweierlei Strategien erheblich steigern:
- Vergröberung des Gefüges. Bei Vergröberung eines Gefüges verlängert sich der für den im Kriechprozess stattfindenden Stofftransport notwendige Diffusionsweg erheblich und verlangsamt damit drastisch die Kriechrate. In der Literatur wird eine reziproke Abhängigkeit zur Korngröße potenziert mit Faktor 3 angegeben. Für Werkstoffe wie Aluminiumoxid und Siliciumnitrid ist diese Abhängigkeit umfangreich dokumentiert.
- Nanopartikel. Mit Hilfe der Nanotechnologie lassen sich keramische Nanopartikel gewinnen, die, wenn in den Korngrenzen einer Keramik eingesetzt, dessen Kriechgeschwindigkeit bei hoher Temperatur und evtl. Last erheblich verlangsamt. Stellvertretend für oxidische Keramik lässt sich beispielsweise die als Verformungsgeschwindigkeit bezeichnete Kriechrate [Einheit 1/s] von Aluminiumoxid durch Dotieren mit Nano-SiC-Partikel um 2 Größenordnungen reduzieren. Ähnliches ist auch für Siliziumnitridwerkstoffe nachgewiesen worden und ist denkbar auch für alle Nichtoxidkeramik.

Beide Strategien sind gleichermaßen geeignet, um kriechbeständige und sinteraktive Werkstoffe herzustellen und ein verformungsarmes Fügen daraus hergestellter Komponenten zu ermöglichen.

Gemäß der Erfindung besteht mindestens eine der zu fügenden Komponenten aus einem Werkstoff, dessen Kriechrate im Fügeprozess stets kleiner als 2·10⁻⁴ 1/s, bevorzugt stets kleiner als 8·10⁻⁵ 1/s, besonders bevorzugt stets kleiner als 2·10⁻⁵ 1/s ist.

Der keramische Werkstoff ist vorzugsweise ausgewählt aus der Gruppe Titandiborid, Borcarbid, Siliciumnitrid, Siliciumcarbid und deren Mischungen.

Bevorzugt handelt es sich zumindest bei einer der zu fügendenen Komponenten um gesintertes Siliciumcarbid (SSiC) mit bimodaler Korngrößenverteilung und mittlerer Korngröße größer als 5 *µ*m, wobei der Werkstoff weitere Stoffkomponenten von bis zu 35 vol.-%, bevorzugter Weise weniger als 15%, besonders bevorzugt weniger als 5% wie beispielsweise Graphit, Borcarbid oder andere keramische Partikel, vorzugsweise Nanopartikel, enthalten kann.

Es zeigen:

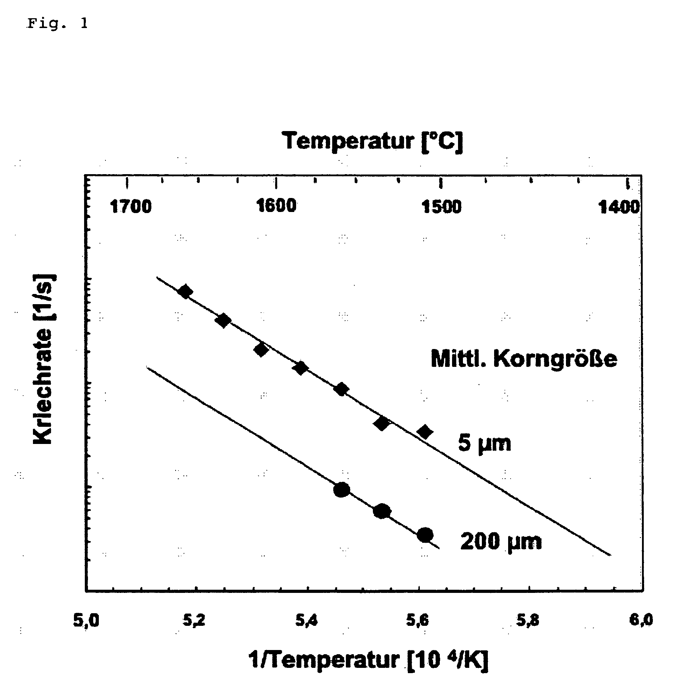

- Fig. 1 :: Kriechgeschwindigkeit von SiC-Werkstoffen in Abhängigkeit von der Temperatur
- Fig. 2 :: Monolithischer Mikroreaktor aus grobkörnigem SSiC ohne Dichtungen und Nähte ausgelegt zur Gasführung im Kreuzstrom (45°-Schnitt)
- Fig. 3 :: Aus 6 SSiC-Komponenten bei 2 150°C nahtfrei gefügter Monolith Verwendet wurden 3 Sorten gesinterter SiC- Werkstoffe. Masse geben die anfängliche mittlere Korngröße an
- Fig. 4 :: Nahtfrei Fügestelle eines SSiC-Bauteils
- Fig. 5 :: Aus 6 SSiC-Komponenten bei 1 800 °C nahtfrei gefügtes Bauteil. Verwendet wurden 3 Sorten gesinterter SiC- Werkstoffe. Masse geben die anfängliche mittlere Korngröße an
- Fig. 6 :: Polierter Anschliff einer Fügestelle eines aus 2 Komponenten diffusionsgeschweißten B4C-Bauteils
- Fig. 7 :: Geätzter Anschliff einer Fügestelle eines aus 2 Komponenten diffusionsgeschweißten B4C-Bauteils

Für das erfindungsgemäße Verfahren besonders geeignete gesinterte SiC mit bimodaler Korngrößenverteilung sind SSiC mit mittlerer Korngröße von größer als 5 *µ*m, bevorzugt größer als 20 *µ*m, besonders bevorzugt größer als 50 *µ*m. Die mittlere Korngröße des Werkstoffs liegt damit um einen Faktor 10-100 weit höher als die von herkömmlich gesinterten, feinkörnigem SiC mit einer mittlere Korngröße von lediglich ca. 5 *µ*m. Sogenanntes grobkörniges gesintertes Siliciumcarbid (SSiC) besitzt aus diesem Grunde einen erheblich höheren Kriechwiderstand als feinkörniges SSiC. In der Literatur finden sich keine Angaben zu Kriechraten von solchen modernen SiC-Werkstoffen. Bild 1 veranschaulicht die niedrigere Kriechrate eines grobkörnigen SSiC (mittlere Korngröße ca. 200 *µ*m) für verschiedene Temperaturen und stellt sie unter identischen Lastbedingungen in Vergleich zu einer feinkörnigen SSiC-Variante (mittlere Korngröße 5 *µ*m), die beispielsweise unter dem Namen EKasic® F von ESK Ceramics GmbH & Co. KG vertrieben wird.

Das erfindungsgemäße Verfahren wird vorzugsweise bei einer Temperatur > 1700°C, insbesondere > 1800°C, besonders bevorzugt > 2000°C durchgeführt. Bevorzugt wird das Verfahren bei einem Druck > 10 kPa, bevorzugt > 1 MPa, besonders bevorzugt > 10 MPa durchgeführt. Die Temperaturhaltezeit beträgt bevorzugt mindestens 10 min, besonders bevorzugt mindestens 30 min.

Mit dem erfindungsgemäßen Verfahren können komplex geformte, keramische Komponenten zu endkonturnahen Bauteilen für den Anlagen- und Maschinenbau mit extremer Temperaturbeständigkeit, Korrosionsbeständigkeit oder Verschleißfestigkeit gefertigt werden. Reaktoren, bei denen bisher die Dichtungen oder Lotnähte die Schwachstellen gebildet haben, können nun als nahtfreier Monolith hergestellt werden.

So lassen sich mittels des Verfahrens beispielsweise Plattenwärmetauscher aus gesinterter SiC-Keramik mit extrem hoher Temperatur und Korrosionsbeständigkeit herstellen. Plattenwärmetauscher wurden bereits früher aus Si-infiltrierter SiC-Keramik (Si-SiC) über das Reaktionsbinden hergestellt. Die nicht universelle Korrosionsbeständigkeit stellt aber eine erhebliche Einschränkung für die Anwendungsmöglichkeiten dar.

Filter und insbesondere keramische Mikroreaktoren lassen sich nun ebenso als Monolith aus gesinterter SiC-Keramik fertigen. Insbesondere Mikroreaktoren mit Kanälen, die für den Kreuzstrom ausgelegt sind, sind nun auch als SSiC-Monolith darstellbar.

Weitere Anwendungen können auch Heizelemente aus elektrisch leitfähiger SSiC-Keramik z.B. für Öfen und Reaktoren sein.

Auskleidungen, Prallschutz oder First-Wall-Komponenten für Fusionsreaktoren sind ebenfalls denkbar. Auch andere komplex geformte, hoch kriechbeständige Bauteile für die Hochtemperaturtechnolgie wie Ofenrollen, -halterungen und Brennerbauteile sind darstellbar. Mehr oder weniger komplexe Konstruktionsbauteile wie Umformwerkzeuge, Platten, Rohre, Flansche oder hermetisch dichte Behälter können so aus isolierender oder elektrisch leitfähiger Nichtoxid-Keramik gefügt werden.

Da das vorliegende Verfahren es erstmals ermöglicht entsprechende Bauteile mit nahtfreier Fügestelle zur Verfügung zu stellen, betrifft die Erfindung auch Bauteile aus einer nichtoxidischen Keramik mit mindestens einer nahtfreien Fügestelle.

Vorzugsweise weist das Bauteil an der nahtfreien Fügestelle eine Biegebruchfestigkeit > 150 MPa, besonders bevorzugt >250 MPa gemessen mit der 4-Punktmethode auf.

Besonders bevorzugt ist die Biegebruchfestigkeit der erfindungsgemäßen Bauteile im Bereich der nahtfreien Fügestelle ebenso hoch wie im Grundwerkstoff des Bauteils.

Bei dem Bauteil handelt es sich vorzugsweise um Strukturbauteile oder Funktionsbauteile, vorzugsweise um Behälter, Rohre, Reaktoren, Auskleidungen, Ventile, Wärmetauscher, Heizelemente, Panzerungen, Verschleißbauteile wie Gleitlager und Gleitringdichtungen, Bremsen, Kupplungen, Düsen oder Umformwerkzeuge.

Die Erfindung betrifft ferner die Verwendung von Bauteilen hergestellt nach dem erfindungsgemäßen Verfahren als Strukturbauteile und Funktionsbauteile, einschließlich Behälter, Reaktoren, Auskleidungen, Ventile, Wärmetauscher, Umformwerkzeuge, Düsen, Panzerungen.

Von besonderem Vorteil ist, wenn die genannten Bauteile aus besonders grobkörniger SSiC-Keramik (mittlere Korngröße > 50 *µ*m) bestehen. Nicht nur das verformungsarme Fügen gelingt dann leichter, sondern auch die Korrosionsbeständigkeit der Bauteile ist dadurch erheblich verbessert.

Die folgenden Beispiele dienen der weiteren Erläuterung der Erfindung.

### Beispiel 1: Diffusionsschweißen von grobkörnigem SSIC-Komponenten

Polierte Platten der Abmessungen 50 X 35 X 5 mm aus gesintertem grobkörnigen SiC (mittlere Korngröße ca. 200 *µ*m) werden in einer Heißpresse zu einem Stapel geschichtet. Ein Fügezyklus mit Stickstoff-Atmosphäre, einer Temperatur von 2150°C, einer Last von 11,4 MPa und einer Haltezeit von 45 min führt zu einer plastischen Verformung in Richtung der Krafteinleitung von weniger als 1%. Das gefügte Bauteil stellt sich als nahtfreier Monolith dar. Die Kriechrate dieses SSiC-Werkstoffs beträgt bei 2150°C weniger als 2·10⁻⁵ 1/s.

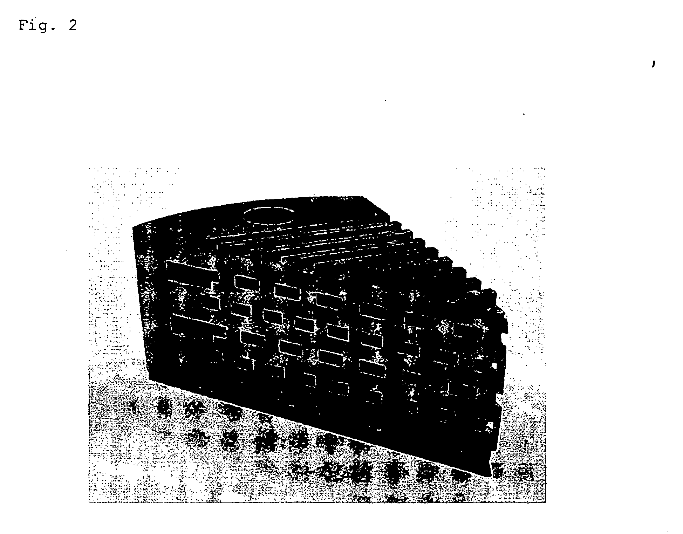

Mit diesem Fügezyklus lässt sich beispielsweise ein Mikroreaktor wie in Fig. 2 gezeigt als Monolith herstellen. Der Anschliff in 45° zur Kanalrichtung lässt erkennen, das der Monolith homogen aus einem grobkörnigem SSiC besteht, die Kanäle keine Verformungen aufweisen und keine Nähte vorhanden sind.

### Beispiel 2: Diffusionsschweißen von Komponenten aus verschiedenen SSiC-Sorten

Polierte Platten der Abmessungen 50 X 35 X 5 mm aus unterschiedlichen gesintertem SiC-Qualitäten werden in einer Heißpresse zu einem Stapel geschichtet. Für den zu fügenden Monolithen kommen jeweils 2 Platten aus grobkörnigem (mittlere Korngröße ca. 200 *µ*m), feinkörnigem SSiC-Werkstoff (mittlere Korngröße ca. 5 *µ*m) und 2 Platten aus einem SSiC-Kompositwerkstoff mit einer anfänglich mittleren Korngröße (ca. 50 *µ*m) zum Einsatz. Der Stapel wird unter Stickstoff-Atmosphäre bei einer Temperatur von 2150°C mit einer Last von 11,4 MPa für 45 min beaufschlagt.

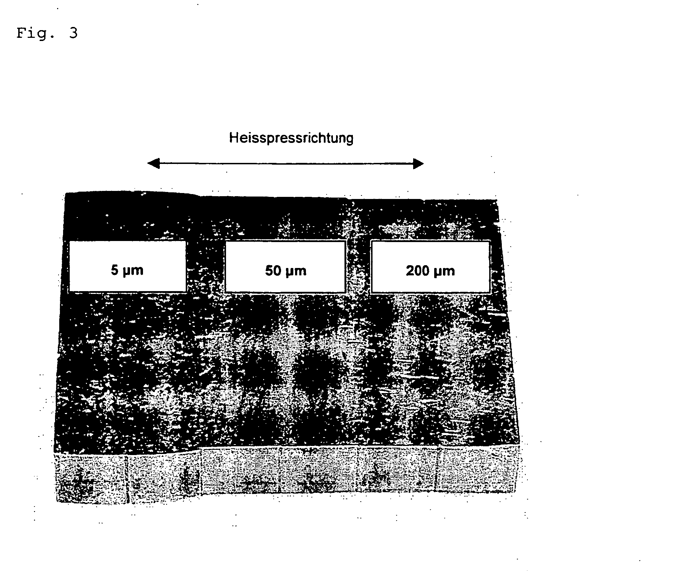

Fig. 3 zeigt den polierten Anschliff des aus 6 Komponenten gefügten Monolithen. Plastische Verformung von ca. 15 % parallel zur Richtung der Krafteinleitung ist im Bauteil nur dort vorhanden, wo anfänglich feinkörniger SiC-Werkstoff vorlag (2 Platten links im Bilde). Der grobkörnige SiC-Werkstoff (2 Platten rechts im Bild) und auch der SSiC-Werkstoff mit mittlerer Korngröße (2 Platten in der Mitte) bleiben während des Fügens formstabil (Verformung < 1%). Dieses Beispiel zeigt, dass auch Komponenten aus ausgewählten unterschiedlichen SiC-Sorten nahtfrei und verformungsarm zu einem Monolithen miteinander verbunden werden können.

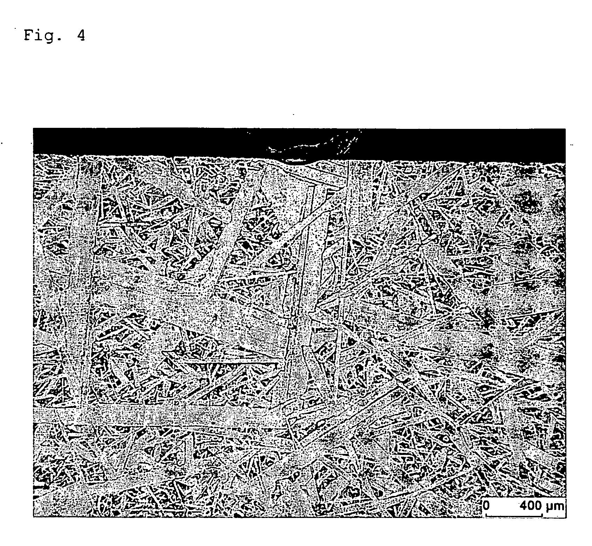

An dem gezeigten polierten Anschliff ist an keiner der Fügestellen mit dem Mikroskop eine Grenzfläche zu erkennen. Auch eine Ätzung des Anschliffs, womit die Korngrenzen freigelegt werden, lässt keine Naht erkennen. Statt dessen ist, wie in Fig. 4 anhand der grobkörnigen SSiC-Komponenten erkennbar, dass die Körner von beiden Platten ineinander verwachsen und damit die Komponentengrenzfläche auflösen. Gleiches ist an den eigengepaarten Fügestellen, sowie an den Fügestellen artfremder SiC-Komponenten festzustellen. Aus der guten Verbindung resultiert eine sehr hohe mechanische Festigkeit. Die Festigkeit eines aus dem Bauteil gefertigten Biegebalkens übersteigt im 4-Pkt-Biegeversuch den Wert von 290 MPa.

Fig. 3 veranschaulicht zudem, dass die Gefüge aller drei SSiC-Werkstoffe sich während dieses Fügezyklus mit sehr hoher Temperatur vergröbern.

### Beispiel 3: Diffusionsschweißen von Komponenten aus verschiedenen SSiC-Sorten

Gemäß vorliegender Erfindung werden polierte Platten der Abmessungen 50 X 35 X 5 mm aus unterschiedlichen gesintertem SiC-Qualitäten in einer Heißpresse zu einem Stapel geschichtet. Für den zu fügenden Monolithen kommen jeweils 2 Platten aus grobkörnigem (mittlere Korngröße ca. 200 *µ*m), feinkörnigem SSiC-Werkstoff (mittlere Korngröße ca. 5 *µ*m) und 2 Platten aus einem SSiC-Kompositwerkstoff mit einer anfänglich mittleren Korngröße von ca. 50 *µ*m) zum Einsatz. Im Unterschied zu Beispiel 2 wird der Stapel bei einer verminderten Temperatur von 1800°C unter Stickstoff-Atmosphäre mit einer Last von 11,4 MPa für 45 min beaufschlagt.

Die Kriechrate des feinkörnigen SSiC ist bei dieser Temperatur ausreichend klein für ein verformungsarmes Fügen aller SSiC-Komponenten miteinander. Alle SSiC-Sorten, einschließlich das feinkörnige SSiC, weisen eine plastische Verformung in Richtung der Krafteinleitung von weniger als 1% auf. Die Kriechrate aller SSiC-Werkstoffe beträgt bei 1800°C weniger als 2·10⁻⁵ 1/s.

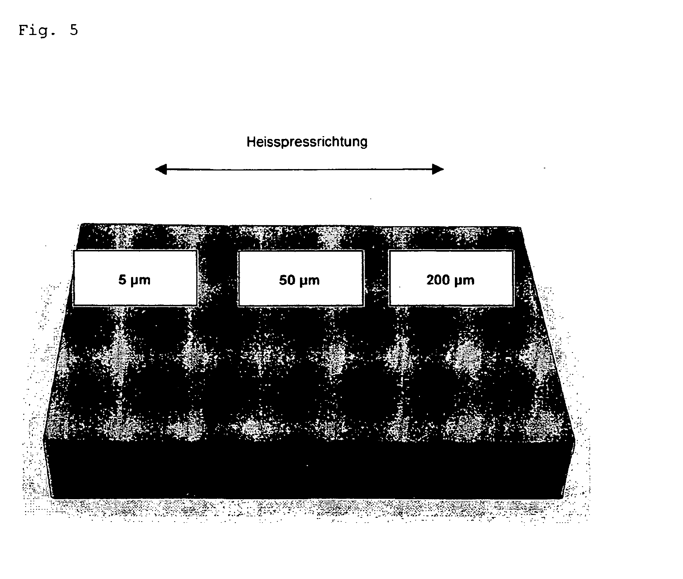

Trotz der geringen Temperatur ist mikroskopisch an dem in Fig. 5 gezeigten polierten Anschliff keine Fügenaht erkennbar. Eine Vergröberung der Gefüge findet nicht statt. Ein Verwachsen der Körner miteinander bleibt aus. Statt dessen werden durch den Fügezyklus die Komponentengrenzflächen in eine Korngrenze überführt, die Bestandteil eines polykristallinen Monolithen ist. Nach einer Ätzbehandlung zur Freilegung von Grenzflächen ist eine Ebene aneinandergereihter Korngrenzen erkennbar. Die Komponenten bilden somit einen Monolithen. Die Festigkeit der Fügeverbindung übersteigt 200 MPa.

### Beispiel 4: In-situ Vergröberung und Diffusionsschweißen von feinkörnigen SiC-Komponenten

Polierte Platten der Abmessungen 50 X 35 X 5 mm aus feinkörnigem, gesintertem SSiC (mittlere Korngröße ca. 5 *µ*m) werden in einer Heißpresse zu einem Stapel geschichtet. Die Anwendung eines Fügezyklus mit einer Temperatur von 2150°C und Stickstoff-Atmosphäre, bei dem noch vor der Aufgabe der maximalen Last von 11,4 MPa der Werkstoff durch in-situ Temperung für 30 min in ein grobkörniges SSiC mit mittlerer Korngröße von 50 *µ*m überführt wird, führt nach 45 min Haltezeit unter Last zu einer plastischen Verformung von weniger als 1% in Richtung der Krafteinleitung. Die Kriechrate dieses in-situ vergröberten SSiC-Werkstoffs beträgt bei 2150°C weniger als 2·10⁻⁵ 1/s.

### Beispiel 5: Diffusionsschweißen von Borcarbid mit Korngrenzpartikel

Polierte Platten (50*50*6mm) aus einem Partikel-verstärktem Borcarbid werden in einer Heißpresse zu einem Stapel geschichtet. Ein Fügezyklus bei 2150°C mit Stickstoff-Atmosphäre, einer Last von 8 MPa und einer Haltezeit von 45 min führt zu einer plastischen Verformung von 5% in Richtung der Krafteinleitung. Die Kriechrate dieses Werkstoffs beträgt bei 2150°C weniger als 8·10⁻⁵ 1/s.

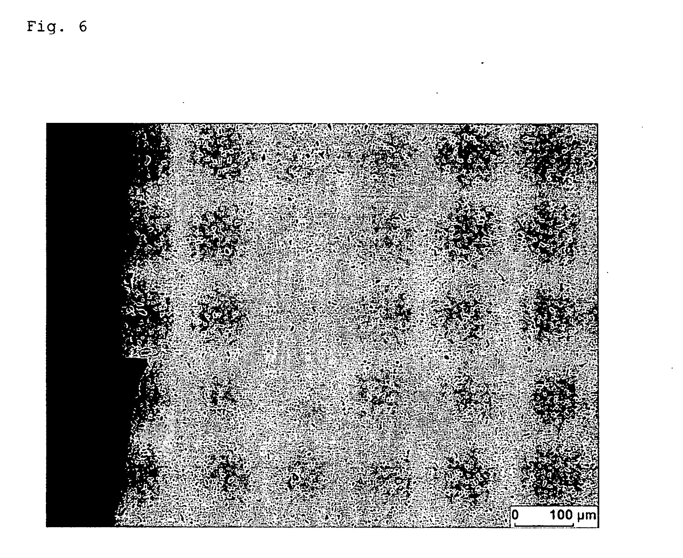

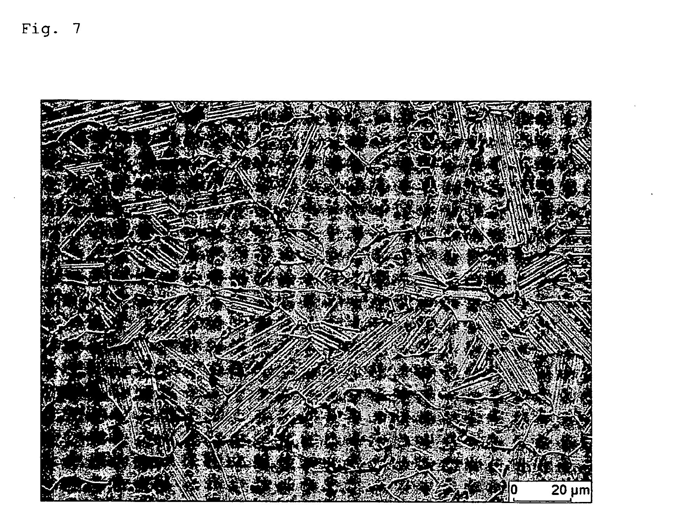

Als Bauteil resultiert ein nahtloser Monolith. Fig. 6 zeigt den polierten Anschliff des Bauteils. Im Mikroskop sind keinerlei Nähte an der Fügestelle erkennbar. Ein Verwachsen der Körner von gegenüberliegender Komponenten miteinander bleibt aus. Statt dessen werden durch den Fügezyklus die Komponentengrenzflächen in eine Korngrenze überführt, die Bestandteil eines polykristallinen Monolithen ist. Nach einer Ätzbehandlung zur Freilegung von Grenzflächen ist eine Ebene aneinandergereihter Korngrenzen erkennbar (Fig. 7).

### Vergleichsbeispiel 6: Diffusionsschweißen von feinkörnigem SSiC-Komponenten

Polierte Platten aus gesintertem SiC (mittlere Korngröße ca. 5 *µ*m) der Abmessungen 50 X 35 X 5 mm werden in einer Heißpresse zu einem Stapel geschichtet. Die Anwendung eines Fügezyklus bei einer Temperatur von 2150°C, Stickstoff-Atmosphäre, einer Last von 11,4 MPa Last und einer Haltezeit von 10 min führt einem stark plastisch verformten Bauteil mit einer plastische Verformung von ca. 12 % in Richtung der Krafteinleitung erfährt. Die Kriechrate dieses SiC-Werkstoffs beträgt bei 2150°C ca. 2·10⁻⁴ 1/s.

## Patentansprüche

1. Verfahren zum Fügen von keramischen Komponenten, wobei die zu fügenden Komponenten aus gesinterter Nichtoxidkeramik bestehen, und die Komponenten in einem Diffusionsschweiβverfahren in Gegenwart einer Schutzgas-Atmosphäre miteinander in Kontakt gebracht werden und unter Aufbringung einer Temperatur von mindestens 1600°C und einer Last > 10 kPa mit einer Temperaturhaltezeit von mindestens 10 min verformungsarm zu einem Monolithen gefügt werden, **dadurch kenngezeichnet dass** die zu fügenden Komponenten eine plastische Verformung in Richtung der Krafteinleitung von weniger als 5%, bevorzugt weniger als 1% erfahren, und wobei mindestens eine der zu fügenden Komponenten aus einer Nichtoxidkeramik besteht, die im Fügeprozess eine Kriechrate stets kleiner als 2 x 10⁻⁴ 1/s, bevorzugt stets kleiner als 8 x 10⁻⁵ 1/s, besonders bevorzugt stets kleiner als 2 x 10⁻⁵ 1/s besitzt.

2. Verfahren gemäß Anspruch 1. **dadurch gekennzeichnet, dass** als Diffusionsschweißverfahren ein Heißpressverfahren genutzt wird.

3. Verfahren gemäß Anspruch 1 oder 2, **dadurch gekennzeichnet, dass** mindestens eine der zu fügenden Komponenten aus Titandiborid, Borcarbid, Siliciumnitrid, Siliciumcarbid oder deren Mischungen, besonders bevorzugt aus Siliciumcarbid besteht.

4. Verfahren gemäß Anspruch 3, **dadurch gekennzeichnet, dass** mindestens eine der zu fügenden Komponenten aus grobkörnigem gesintertem Siliciumcarbid mit bimodaler Korngrößenverteilung und mittlerer Korngröße größer als 5 µm, bevorzugt größer als 20µm, besonders bevorzugt größer als 50 µm, besteht, welches bis zu 35 Vol.-% weiterer Stoffkomponenten, wie Graphit, Borcarbid oder andere keramische Partikel enthalten kann.

5. Verfahren gemäß einem der Ansprüche 1 bis 4 **dadurch gekennzeichnet, dass** es bei einer Temperatur > 1800°C, insbesondere bevorzugt > 2000°C und einer Last > 1 MPa, bevorzugt > 10 MPa durchgeführt wird, wobei die Temperaturhaltezeit bevorzugt eine Dauer von 30 min übersteigt.

6. Verwendung von Bauteilen als Strukturbauteile oder Funktionsbauteile, einschließlich Behälter, Rohre, Reaktoren, Auskleidungen, Ventile, Wärmetauscher, Heizelemente, Panzerungen, Verschleißbauteile wie Gleitlager und Gleitringdichtungen, Bremsen, Kupplungen, Düsen, Umformwerkzeuge, wobei diese Verwendung den folgenden Schritt aufweist Herstellung des Banteils mit einem Verfahren gemäß einem der Ansprüche 1 bis 5.

## Claims

1. A process for joining ceramic components, wherein the components which are to be joined consist of sintered nonoxide ceramic, and the components are brought into contact with one another in a diffusion-welding process in the presence of a shielding gas atmosphere and are joined with little deformation, under the application of a temperature of at least 1600°C and a load of > 10 kPa with a temperature-holding time of at least 10 min, to form a monolith, **characterized in that** the components which are to be joined experiencing plastic deformation in the direction in which force is introduced of less than 5%, preferably less than 1%, and wherein at least one of the components to be joined consists of a nonoxide ceramic which during the joining process has a creep rate which is always lower than 2·10⁻⁴ 1/s, preferably always lower than 8·10⁻⁵ 1/s, particularly preferably always lower than 2·10⁻⁵ 1/s .

2. The process as claimed in claim 1, **characterized in that** the diffusion welding used is a hot-pressing process.

3. The process as claimed in claim 1 or 2, **characterized in that** at least one of the components to be joined consists of titanium diboride, boron carbide, silicon nitride, silicon carbide or mixtures thereof, particularly preferably of silicon carbide.

4. The process as claimed in claim 3, **characterized in that** at least one of the components to be joined consists of coarse-grained sintered silicon carbide with a bimodal grain size distribution and a mean grain size of greater than 5 µm, preferably greater than 20 µm, particularly preferably greater than 50 µm, which may contain up to 35% by volume of other material components, such as graphite, boron carbide or other ceramic particles.

5. The process as claimed in one of claims 1 to 4, **characterized in that** it is carried out at a temperature of > 1800°C, especially preferably > 2000°C, and a load of > 1 MPa, preferably > 10 MPa, with the temperature-holding time preferably exceeding a duration of 30 min.

6. The use of components as structural components or functional components, including containers, tubes, reactors, linings, valves, heat exchangers, heating elements, platings, wearing components, such as sliding-contact bearings or axial face seals, brakes, clutches, nozzles or deformation tools, wherein the use comprises the following step:
preparing the component by a process as claimed in one of claims 1 to 5.

## Revendications

1. Procédé d'assemblage de composants céramiques, lesdits composants à assembler étant constitués de céramiques dépourvues d'oxydes frittées, et lesdits composants étant mis en contact dans un procédé de soudage par diffusion en présence d'une atmosphère gazeuse protectrice et assemblés à une température d'au moins 1600 °C et une charge d'au moins > 10 kPa avec une durée de maintien en température d'au moins 10 min., pour ainsi créer, avec un faible taux de déformation, un monolithe, **caractérisé en ce que** les composants à assembler subissent dans le sens d'application de la force une déformation plastique inférieure à 5 %, de préférence inférieure à 1 %, et au moins un des composants à assembler étant constitué par une céramique dépourvue d'oxydes qui, au cours du processus d'assemblage, possède un taux de fluage inférieur à 2 x 10⁻⁴ 1/s, de préférence inférieur à 8 x 10⁻⁵ 1/s, avec une préférence particulière inférieur à 2 x 10⁻⁵ 1/s.

2. Procédé selon la revendication 1, **caractérisé en ce que** l'on met en oeuvre, en tant que procédé de soudage par diffusion, un procédé par compression à chaud.

3. Procédé selon les revendications 1 ou 2, **caractérisé en ce qu'**au moins un des composants à assembler est constitué de diborure de titane, du carbure de bore, de carbure de silicium ou de leurs des mélanges, avec une préférence particulière de carbure de silicium.

4. Procédé selon la revendication 3, **caractérisé en ce qu'**au moins un des composants à assembler est constitué de carbure de silicium fritté à gros grain, avec une granulométrie bimodale et une granulométrie moyenne supérieure à 5 µm, de préférence supérieure à 20 µm, avec une préférence particulière supérieure à 50 µm, pouvant contenir jusqu'à 35 % en volume d'autres composants tels que le graphite, le carbure de bore ou d'autres particules céramiques.

5. Procédé selon l'une des revendications 1 à 4, **caractérisé en ce qu'**il est mis en oeuvre à une température > 1800 °C, avec une préférence particulière > 2000 °C, et une charge > 1 MPa, de préférence > 10 MPa, la durée de maintien en température dépassant de préférence une durée de 30 min.

6. Utilisation de pièces comme éléments de structure ou éléments fonctionnels, y compris les récipients, des tubes, les réacteurs, les revêtements, les vannes, les échangeurs de chaleur, les éléments chauffants, les blindages, les pièces d'usure comme les coussinets, les bagues d'étanchéité, les freins, les embrayages, les buses, les outils de formage, ladite utilisation comportant l'étape suivante: fabrication de ladite pièce avec un procédé selon l'une des revendications 1 à 5.
